# EUROPÄISCHE PATENTSCHRIFT

(11) **EP 2 149 827 B1**
(45) Veröffentlichungstag und Bekanntmachung des Hinweises auf die Patenterteilung: **24.09.2014**
(21) Anmeldenummer: 08161272.3
(22) Anmeldetag: 28.07.2008
(51) Int. Cl.: G06F 17/21, G05B 19/042

(54) **Erzeugung von Bildern zur Verwendung in mehrsprachigen Bedienprogrammen**
Generation of images for use in multilingual operation programs
Nouveau cadre et structure de signalisation de formation pour systèmes à multiporteuses

(43) Veröffentlichungstag der Anmeldung: 03.02.2010
(73) Patentinhaber: VEGA Grieshaber KG, 77709 Wolfach (DE)
(72) Erfinder: Isenmann, Andreas, 77716, Haslach (DE); Faist, Fridolin, 77709, Oberwolfach (DE)
(74) Vertreter: Kopf, Korbinian Paul

(56) Entgegenhaltungen:
- WO-A-99/63409
- WO-A-03/029907
- US-A1- 2002 143 523
- US-A1- 2007 061 129

## Beschreibung

### Gebiet der Erfindung

Die Erfindung betrifft die Bilderzeugung für die Füllstandmessung oder Druckmessung. Insbesondere betrifft die Erfindung ein Verfahren zum Erzeugen eines Bildes mit Text in einer ausgewählten Sprache zur Verwendung in einem mehrsprachigen Bedienprogramm für die Füllstandmessung oder Druckmessung, ein Programnelement, ein computerlesbares Medium sowie ein Steuergerät für ein Füllstandmessgerät oder Druckmessgerät.

### Technologischer Hintergrund

In Bedienprogrammen (Bedientools) mit mehrsprachigen Bedienoberflächen werden heute schon Bilder zur Verdeutlichung gewisser Sachverhalte eingesetzt. Viele dieser Bilder bestehen hierbei nicht nur aus rein grafische Elementen, sondern beinhalten zusätzlich noch sprachabhängige Elemente, wie z. B. Beschriftungen. Solche Bilder müssen für jede Zielsprache getrennt zur Verfügung gestellt werden. Alternativ kann die Beschriftung sprachunabhängig gestaltet werden. Als eine Möglichkeit sei hier beispielsweise das einfache Durchnummerieren der zu beschreibenden Elemente der Grafik genannt. Da es sich hierbei nur um einen Verweis an eine andere Stelle handelt, muss der Bediener sich die gesuchte Information über mehrere Schritte einholen, was die Bedienfreundlichkeit deutlich einschränkt.

Übersetzungen werden in der Regel durch Übersetzer durchgeführt, die über Erfahrung in den üblichen Programmen, wie beispielsweise Microsoft Word™ oder Microsoft Excel™ verfügen. Diese Programme sind für reine Texteingabe optimiert. Ebenso können Datenbarlken zur Verwaltung von Textbtöcken und deren Übersetzungen Verwendung finden. Beispiele für solche Datenbanken sind Access™, Microsoft SQL Server, MySQL und Oracle.

Sollen die in den Bildern enthaltenen Texte übersetzt werden, so muss hierfür eine Grafiksoftware zum Einsatz kommen. Liegen die Bilder in einem reinen Grafikformat vor, so müssen die in der Grafik enthaltenden Texte durch die jeweilige Übersetzung ersetzt werden. Überlappen hierbei die enthaltenen Texte der Grafikelemente mit der grafischen Information, so ist das Ersetzen der Textinformation mit erheblichem Aufwand verbunden. Beispiele für reine Grafikformate sind JPG, BMP, GIF, TIFF, usw.

Spezielle Grafikprogramme, wie Adobe Photo Shop™, erlauben das Arbeiten in mehreren Ebenen. Hierbei kann beispielsweise eine Ebene dazu verwendet werden, um die rein grafische Information aufzunehmen. Die Texte können in anderen Ebenen der Grafik überlagert werden und sind somit für die Übersetzung leichter zugänglich. Sollen die hierbei generierten Bilder in Bedientools verwendet werden, so müssen die Bilder in aller Regel zuerst in ein reines Grafikformat, wie beispielsweise JPG, BMP, GIF oder TIFF, um konvertiert werden. Kommen zur Übersetzung solche Grafikprogramme zum Einsatz, so ist die Auswahl der zur Verfügung stehenden Übersetzer deutlich eingeschränkt, da das erforderliche Spezialwissen oft nicht vorhanden ist.

Ein weiterer Nachteil besteht darin, dass unter Umständen unzählige sprachabhängige Bilder für jede Zielsprache zu verwalten sind. Alle Änderungen, gleich ob sie einen Text oder ein grafisches Element betreffen, führen zu enormen Aufwänden in der Pflege der vorhandenen Bilder. Übliche Vorgehensweisen, wie der Befehl "Suchen und Ersetzen", können in der Regel nicht verwendet werden.

Die WO 03/029907 offenbart ein Verfahren zum Bedienen eines Feldgerätes mittels Browser. Die dortige Bedienoberfläche wird als HTML-Seite bereitgestellt.

### Zusammenfassung der Erfindung

Es ist eine Aufgabe der Erfindung, eine verbesserte Erzeugung von Hilfsbildern für mehrsprachige Bedienprogramme für die Füllstandmessung oder für die Druckmessung bereitzustellen.

Es sind ein Verfahren zum Erzeugen eines Bildes mit Text in einer ausgewählten Sprache zur Verwendung in einem mehrsprachigen Bedienprogramm für die Füllstandmessung oder Druckmessung, ein Programmelement, ein computerlesbares Medium und ein Steuergerät für ein Füllstandmessgerät oder Druckmessgerät gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Verfahren, das Programmelement, das computerlesbare Medium und das Steuergerät.

Gemäß einem Ausführungsbeispiel der Erfindung ist ein Verfahren zum Erzeugen eines Bildes mit Text in einer ausgewählten Sprache zur Verwendung in einem mehrsprachigen Bedienprogramm für die Füllstandmessung oder Druckmessung angegeben, bei dem Bilddaten, die mit einem visualisierbaren Bild korrespondieren, bereitgestellt werden. Weiterhin werden Steuerdaten zur Steuerung einer Überlagerung der Bilddaten mit Textdaten, die sich auf die Bilddaten beziehen und mit einem Text in der ausgewählten Sprache korrespondieren, bereitgestellt. Danach erfolgt eine Überlagerung der Bilddaten und der Textdaten unter Verwendung der Steuerdaten.

In anderen Worten enthalten die Steuerdaten Informationen darüber, welche Textdaten an welchem Ort des Bildes mit den Bilddaten überlagert werden sollen. Aus den Bilddaten kann zu einem späteren Zeitpunkt ein visualisierbares, also auf einem Bildschirm darstellbares Bild erzeugt werden. Auch kann das bereits erzeugte Bild mit den Textdaten oder den bereits erzeugten Textbausteinen in der entsprechenden Sprache überlagert werden.

Auf diese Weise können Hilfsbilder für mehrsprachige Bedientools in allen Zielsprachen auf einfache Weise zur Verfügung gestellt werden, ohne dass hierbei die eigentliche Bildinformation geändert werden muss. Somit können Rechenleistung, Verwaltungs- und Übersetzungsaufwand reduziert werden. Es muss lediglich die Textdatei (Textdaten) übersetzt werden. Weitere Kenntnisse, beispielsweise hinsichtlich der Bedienung eines Grafikprogramms, sind nicht erforderlich.

Durch die Trennung der Textinformation von der grafische Information müssen die Bilder nicht in jede Zielsprache überführt werden. Sowohl die Grafik als auch die überlagerten Texte können bequem verwaltet und editiert werden. Der erforderliche Platzbedarf auf dem Datenträger (sowohl zur Speicberung des Bildes als auch des Textes) wird reduziert. Weiterhin können die zentral verwalteten Bilder und die zugehörigen Texte für die Gestaltung der Bedienoberflächen für alle unterstützten Bedientools verwendet werden. Dies reduziert den Aufwand zur Erstellung der Grafiken erheblich, da die sprachabhängigen Bilder nicht für jedes Bedientool gesondert erstellt werden müssen.

Gemäß einem weiteren Ausführungsbeispiel der Erfindung handelt es sich bei den Bilddaten um ein visualisierbares Bild und bei den Textdaten um einen visualisierbaren Text.

In anderen Worten werden nicht die Rohdaten (aus denen die Bilder und Texte erstellt werden) überlagert, sondern vielmehr das fertige Bild mit den entsprechenden fertigen Textbausteinen.

Gemäß der Erfindung sind die Bilddaten textfrei. Eine Bearbeitung der Bilddaten zur Änderung der Zielsprache ist somit nicht erforderlich.

Gemäß einem weiteren Ausführungsbeispiel der Erfindung werden die Bilddaten durch die Überlagerung mit den Textdaten nicht mehr verändert. Es muss also lediglich eine Version der Bilddaten gespeichert sein, die unverändert zur Überlagerung mit sämtlichen Textbausteinen (in der jeweiligen Zielsprache) dient.

Gemäß einem weiteren Ausführungsbeispiel der Erfindung werden die Steuerdaten als Steuerdatei bereitgestellt. Diese Steuerdatei kann in einem Speicher des Steuergerätes gespeichert sein. Bei dem Steuergerät handelt es sich beispielsweise um ein stationär installiertes Steuergerät mit einem Monitor und einer entsprechenden Recheneinheit oder aber auch um ein mobiles Steuergerät, wie beispielsweise eine mobile Ausgabe- und Bedieneinheit, welche auf das Füllstandmessgerät oder das Druckmessgerät aufgesetzt bzw. daran angeschlossen werden kann.

Die Datenübertragung zwischen dem Steuergerät und dem Füllstandmessgerät oder dem Druckmessgerät kann sowohl drahtgebunden, beispielsweise über einen Datenbus, oder aber auch drahtlos erfolgen.

Gemäß einem weiteren Ausführungsbeispiel der Erfindung enthalten die Steuerdaten Informationen darüber, an welcher Stelle im Bild ein bestimmter Textbaustein des Textes mit dem Bild überlagert werden soll.

Gemäß einem weiteren Ausführungsbeispiel der Erfindung enthalten die Steuerdaten Formatierungsinformationen des Textes.

Somit kann der Text unabhängig von der gewünschten Formatierung übersetzt werden. Die Textformatierung wird dann bei der Überlagerung von Bild und Text von dem Steuerprogramm vorgenommen, das auf die Steuerdaten zugreift. Die Steuerdaten können zentral verwaltet und aktualisiert werden, beispielsweise über einen zentralen Server.

Gemäß einem weiteren Ausführungsbeispiel der Erfindung erfolgt eine benutzergesteuerte Auswahl der Sprache des zu Überlagernden Textes. In anderen Worten kann der Benutzer, beispielsweise über eine entsprechende Eingabeeinheit, auswählen, welche Zielsprache er wünscht.

Auch kann, gemäß einem weiteren Ausführungsbeispiel der Erfindung, die Auswahl der Sprache des zu überlagernden Textes automatisch erfolgen, beispielsweise indem das Steuergerät feststellt, in welchem Land es sich befindet. Hierzu kann beispielsweise ein im Steuergerät vorhandener GPS Empfänger verwendet werden. In anderen Worten wird dem Benutzer das erzeugte (Hilfs) Bild für stein Bedienprogramm jeweils in der geeigneten Sprache dargestellt, ohne dass er selbst tätig werden muss. Natürlich kann der Benutzer die gewünschte Sprache auch selber wählen.

Gemäß einem weiteren Ausführungsbeispiel der Erfindung wenden die Textdaten in einer Datenbank in einem Speicher gespeichert. Die Steuerdaten sind dafür ausgelegt, ein Referenzieren und ein Identifizieren der Textdaten zu ermöglichen.

Auf diese Weise können über die Steuerdaten zu jedem Zeitpunkt die entsprechenden Textdaten aufgefunden werden, die dann mit dem Bild überlagert werden sollen.

Gemäß einem weiteren Ausführungsbeispiel der Erfindung werden die Textdaten über eine Datenbank verwaltet.

Gemäß einem weiteren Ausführungsbeispiel der Erfindung erfolgt das Überlagern der Bilddaten und der Textdaten während dem Betrieb des Bedienprogramms, also zur Laufzeit des Bedientools.

Auf diese Weise wird Zeit gespart. Der Benutzer ist in der Regel davon nicht betroffen, da der Prozess vollautomatisch im Hintergrund abläuft.

Gemäß einem weiteren Ausführungsbeispiel der Erfindung ist ein Programmelement angegeben, das, wenn es auf einem Prozessor ausgeführt wird, den Prozessor anleitet, die oben angegebenen Verfahrensschritte durchzuführen.

Gemäß einem weiteren Ausführungsbeispiel der Erfindung ist ein computerlesbares Medium angegeben, auf dem ein Programmelement gespeichert ist, das, wenn es auf einem Prozessor ausgeführt wird, den Prozessor anleilet, die oben angeschriebenen Verfahrensschritte durchzuführen.

Gemäß einem weiteren Ausführungsbeispiel der Erfindung ist ein Steuergerät für ein Füllstandmessgerät oder für ein Druckmessgerät angegeben, wobei das Steuergerät eine Recheneinheit zum Erzeugen eines Bildes mit Text in einer ausgewählten Sprache zur Verwendung in einem mehrsprachigen Bedienprogramm für das Füllstalidmessgerät oder für das Druckmeßgerät aufweist, wobei die Recheneinheit zur Durchführung der oben angegebenen Verfahrensschritte ausgeführt ist.

Im Folgenden werden mit Verweis auf die Figuren bevorzugte Ausführungsbeispiele der Erfindung beschrieben.

### Kurze Beschreibung der Figuren

Fig. 1 zeigt ein Flussdiagramm eines Verfahrens gemäß einem Ausführungsbeispiel der Erfindung.

Fig. 2 zeigt ein Steuergerät gemäß einem Ausführungsbeispiel den Erfindung.

Fig. 3 zeigt ein Füllstandmessgerät mit einem Steuergerät gemäß einem Ausführungsbeispiel den Erfindung.

Fig. 4 zeigt eine sprachabhängige Grafik für ein DTM gemäß einen Ausführungsbeispiel der Erfindung.

Fig. 5 zeigt eine sprachabhängige Grafik in einer EDD gemäß einen Ausführungsbeispiel den Erfindung.

### Detaillierte beschreibung von Ausführungsbeispielen

Die Darstellungen in den Figuren sind schematisch und nicht maßstäblich.

In der folgenden Figurenbeschrcibung werden für die gleiche oder ähnlichen Elemente die gleichen Bezugsziffern verwendet.

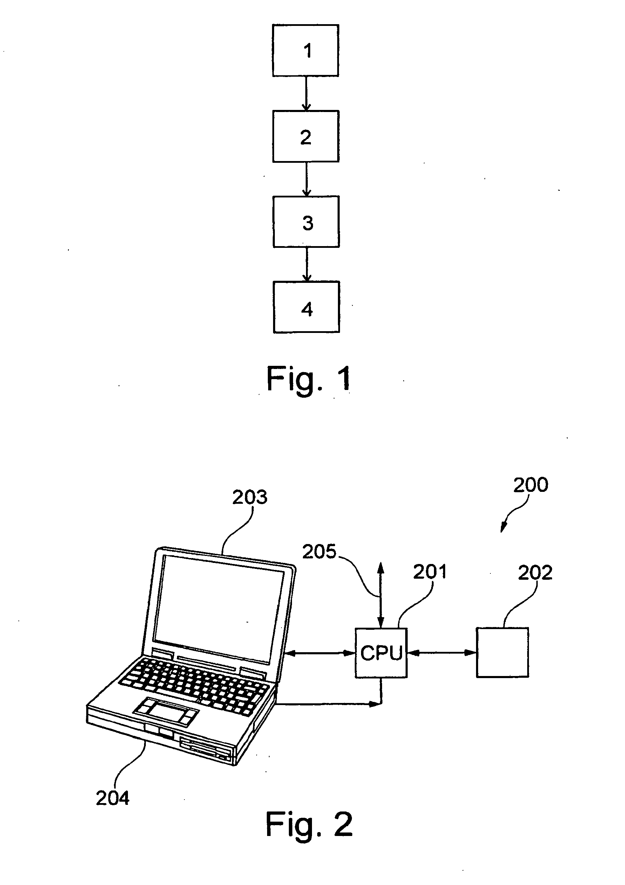

Fig. 1 zeigt ein Flussdiagramm eines Verfahrens gemäß einem Ausführungsbeispiel der Erfindung. In einem ersten Schritt werden Bilddaten, die mit einem zu visualisierenden Bild korrespondieren, bereitgestellt. Zu jedem Bild (bzw. zu jedem Bilddatensatz), das sprachabhängige Elemente enthält, wird neben dem eigentlichen textfreien Bild eine Steuerdatei (bzw. Steuerdaten) zur Verfügung gestellt. Dies erfolgt in Schritt 2. Diese Steuerdaten dienen der Überlagerung der Bilddaten mit den Textdaten.

Die Steuerdatei kann beispielsweise im XML-Format vorliegen und enthält Informationen, an welcher Stelle in der Grafik welche Texte überlagert werden sollen. Außerdem kann die Steuerdatei noch Formatierungsinformationen, wie die Ausrichtung der Textbausteine oder die zu verwendenden Schriftarten oder Schriftgrößen enthalten. Die Texte bzw. Textbausteine und deren Übersetzungen, die durch diese Steuerdatei referenziert und identifiziert werden, können in gewohnter Weise beispielsweise durch den Einsatz von Datenbanken verwaltet werden.

In Schritt 3 greift die Steuerdatei auf die Datenbank, in der die Textdaten gespeichert sind, zu und wählt die passenden Textbausteine in einer geeigneten Sprache aus.

In Schritt 4 schließlich erfolgt die Überlagerung der Bilddaten und der Textdaten unter Verwendung der Steuerdaten. In anderen Worten wird die Überlagerung von einer Recheneinheit durchgeführt, welche von der Steuerdatei angewiesen wird, wie die Überlagerung durchgeführt werden soll.

Gemäß der Erfindung werden die sprachabhängigen Bilder generiert, indem Texte aus einer Datenbank über die Steuerdatei referenziert und an der entsprechenden Stelle einer textfreien und damit sprachunabhängigen Grafik überlagert werden.

Je nachdem, welche Möglichkeiten das zu verwendende Bedientool bietet, kann diese Textüberlagerung zur Laufzeit des Bedientools erfolgen. Dies bedeutet, dass die sprachabhängige Grafik erst zu dem Zeitpunkt der Verwendung erzeugt wird. Diese Vorgehensweise ist beispielsweise bei einem DTM möglich.

Andere Bedientools bieten keine Möglichkeit, Grafiken zur Laufzeit zu erzeugen, sondern können nur existierende Grafiken darstellen. Als Beispiel seien hier alle Bedientools, die auf Basis der EDD-Teclinologie (Electronic Device Description-Technologie) arbeiten, wie Emerson AMS, Siemens PDM, usw., genannt.

Auch für solche Bedientools kann die vorliegende Erfindung zum Einsatz kommen. Die Vielzahl der sprachabhängigen Bilder können hierbei durch einen Bildgenerator aus den sprachunabhängigen Bildern im Vorfeld erzeugt werden. Hierbei muss jedoch eine Regel definiert sein, wie beispielsweise der Dateiname der sprachabhängigen Grafik aufgebaut ist, damit diese Grafik dann aus der EDD referenziert werden kann.

Die sprachabhängigen Bilder können beispielsweise aus der sprachunabhängigen Basisgrafik "Abgleich.jpg" durch Verwendung einer Steuerdatei in die sprachabhängigen Grafiken "Abgleich_de.jpg", Abgleich_en.jpg" und "Abgleich_fr.jpg" überführt werden. Es ist zu erkennen, dass der Dateiname der sprachabhängigen Grafiken um ein zweistelliges Länderkürzel erweitert wurde. Diese sprachabhängigen Grafiken können in der EDD referenziert werden, in dem die Pfadangabe zu den Grafiken sprachabhängig angegeben wird. Die Pfadangabe wäre in diesem Beispiel wie folgt anzugeben:
"|de|Abgleich_de.jpg|en|Abgleich_en.jpg|fr|Abgleich_fr.jpg"

Fig. 2 zeigt eine schematische Darstellung eines Steuergeräts gemäß einem Ausführungsbeispiel der Erfindung. Das Steuergerät 200 weist eine Recheneinheit 201 (CPU) auf. Die Recheneinheit 201 ist an eine Eingabeeinheit 204 sowie eine Ausgabeeinheit 203, die in Form eines Displays ausgeführt ist, angeschlossen. Über die Eingabeeinheit 204 kann der Benutzer beispielsweise eine Parametrierung des Füllstandmessgeräts oder des Druckmessgeräts vornehmen sowie die gewünsche Sprache auswählen.

Weiterhin ist eine Speichereinheit 202 vorgesehen, die an die Recheneinheit 201 angeschlossen ist. Über eine Kommunikationsverbindung 205, beispielsweise in Form eines Datenbusses oder einer Funkverbindung, ist die Recheneinheit mit dem Messgerät verbunden.

In dem Speicher 202 oder auf der CPU 201 ist ein Computerprogramm (Programmelement) gespeichert, welches das beschriebene Verfahren durchführen kann. Auch kann das Programmelement über das Internet geladen werden.

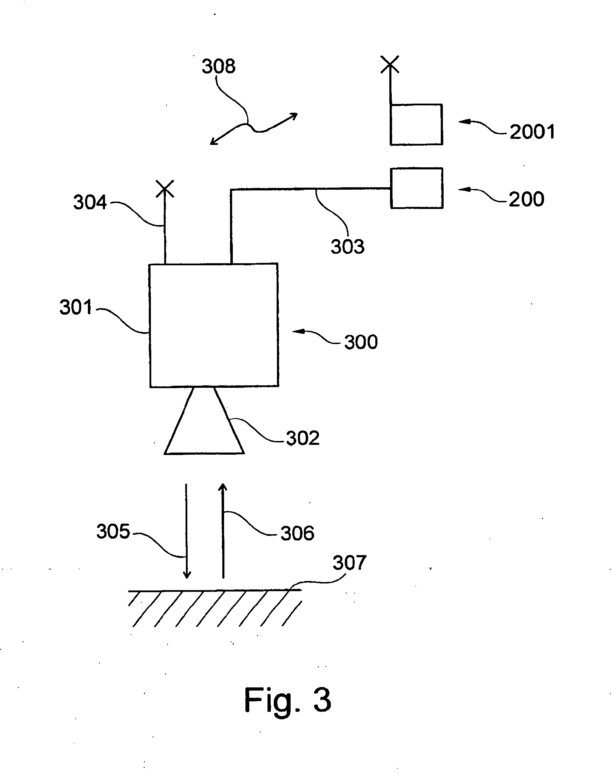

Fig. 3 zeigt eine schematische Darstellung eines Füllstandmessgeräts 300, welches über einen Datenbus 303 an ein Steuergerät 200 und über eine kabellose Datenübertragungsstrecke 308 an ein zweites Steuergerät 2001 angeschlossen ist.

Das Füllstandmessgerät 300 weist insbesondere ein Elektronikmodul 301 sowie eine Antenne 302 auf. Eine entsprechende Antenne ist auch für das zweite Steuergerät 2001 vorgesehen. Die Antenne sendet Sendedaten 305 in Richtung einer Füllgutoberfläche 307 aus. Die dort reflektierten Daten 306 werden von der Antenne 302 empfangen und in der Elektronik 301 ausgewertet. Das entsprechende Messergebnis kann dann kabelgebunden oder kabellos an die Steuergeräte 200, 2001 übertragen werden.

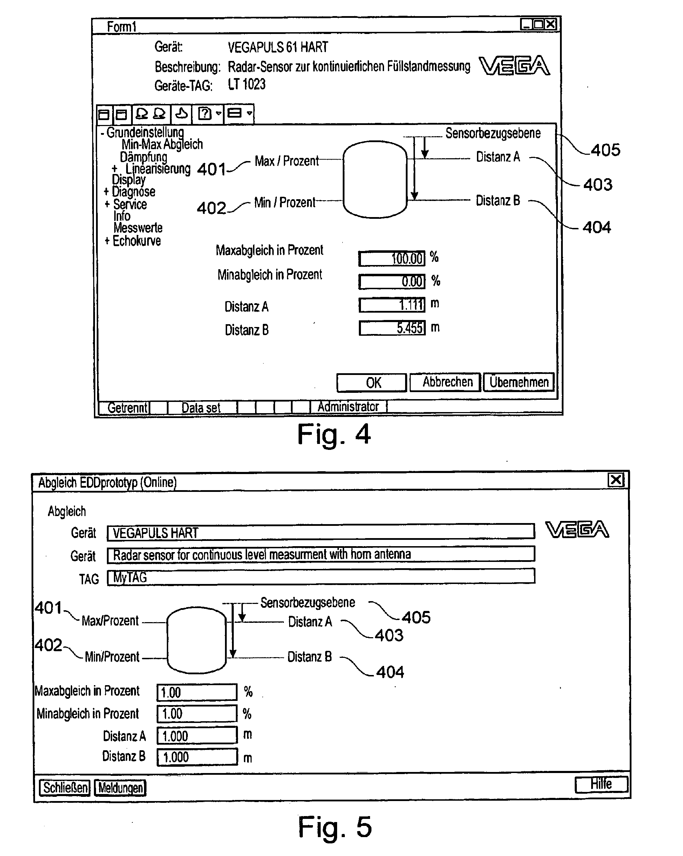

Fig. 4 zeigt den Einsatz einer sprachabhängigen Grafik in einem DTM. Hierbei wurden die sprachabhängigen Texte "Max / Prozent" 401, "Min / Prozent" 402, "Distanz A" 403, "Distanz B" 404 und "Sensorbezugsebene" 405 unter Zuhilfenahme der Steuerdaten der sprachunabhängigen Abgleichgrafik überlagert.

Die Abkürzung DTM steht für Device Type Manager. DTM verwenden die FDT - Technologie (FDT = Field Device Tool). Die FDT - Technologie beschreibt eine standardisierte Kommunikationsschnittstelle zwischen Feldgeräten und Systemen. Bei der FDT Technologie werden binäre Files (DTM) als eine Bedienoberflächenbeschrcibungsdatei genutzt, um die Bedienoberfläche des zugehörigen Feldgeräts zu beschreiben. Die Bedienoberflächenbeschreibungsdatei ist in einer Bedienoberflächenbeschreibungssprache verfasst und wird in das verwendete Bedientool (z. B. PACTware) eingelesen, um über das Bedientool das Feldgerät ansprechen zu können.

Fig. 5 zeigt die Verwendung der sprachabhängigen Datei aus Fig. 4 in einer EDD. Die Abkürzung EDD steht für Electronic Device Description. Hierbei handelt es sich um ein anderes Konzept zur Nutzung einer standardisierten Kommunikationsschnittstelle zwischen Feidgeräten und Systemen. Zu nennen sind in diesem Zusammenhang das Device Description (DD) Konzept, des Electronic Device Description (EDD) Konzept bzw. des Enhanced EDD (EEDD) Konzept. Bei DD, EDD oder EEDD wird die Bedienoberfläche oder die Gerätebeschreibung in einem ASCII Text bereitgestellt, der unter Verwendung einer Beschreibungssprache geschrieben ist, die der Programmiersprache C vergleichbar ist. Daher handelt es sich bei der Bedienoberfiächenbeschreibungsdatei um eine Textdatei. Bei der EDD Technologie werden Text Files (DD, EDD oder enhanced EDD) als eine Bedienoberflächenbeschreibungsdatei genutzt, um die Bedienoberfläche des zugehörigen Feldgeräts zu beschreiben. Die Bedienoberflächenbeschreibungsdatei ist in einer Bedienoberflächenbeschreibungssprache verfasst und wird in das verwendete Bedientool (z. B. PDM der Firma Siemens) eingelesen, um über das Bedientool das Feldgerät ansprechen zu könnten.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Erzeugen eines Bildes mit Text in einer ausgewählten Sprache zur Verwendung in einem mehrsprachigen Bedienprogramm für die Füllstandmessung oder Druckmessung, das Verfahren aufweisend die Schritte:
Bereitstellen von Bilddaten, die mit einem visualisierbaren Bild korrespondieren, wobei die Bilddaten textfrei sind,
Bereitstellen von Steuerdaten zur Steuerung einer Überlagerung der Bilddaten mit Textdaten, die sich auf die Bilddaten beziehen und mit einem Text in der ausgewählten Sprache korrespondieren;
Erzeugen des Bildes durch Überlagern der Bilddaten und der Textdaten unter Verwendung der Steuerdaten.

2. Verfahren nach Anspruch 1,
wobei es sich bei den Bilddaten um ein visualisierbares Bild und bei den Textdaten um einen visualisierbaren Text handelt.

3. Verfahren nach einem der vorhergehenden Ansprüche,
wobei die Bilddaten durch die Überlagerung nicht verändert werden.

4. Verfahren nach einem der vorhergehenden Ansprüche,
wobei die Steuerdaten als Steuerdatei bereitgestellt werden.

5. Verfahren nach einem der vorhergehenden Ansprüche,
wobei die Steuerdaten Information darüber enthalten, an welcher Stelle im Bild ein bestimmter Textbaustein des Textes mit dem Bild überlagert werden soll.

6. Verfahren nach einem der vorhergehenden Ansprüche,
wobei die Steuerdaten Formatierungsinformationen des Textes enthalten.

7. Verfahren nach einem der vorhergehenden Ansprüche, weiterhin aufweisend den Schritt:
benutzergesteuerte Auswahl der Sprache des zu überlagernden Textes.

8. Verfahren nach einem der vorhergehenden Ansprüche, weiterhin aufweisend die Schritte:
Speichern der Textdaten in einer Datenbank;
Referenzieren und Identifizieren der Textdaten mit Hilfe der Steuerdaten.

9. Verfahren nach einem der vorhergehenden Ansprüche, weiterhin aufweisend den Schritt:
Verwalten der Textdaten durch eine Datenbank.

10. Verfahren nach einem der vorhergehenden Ansprüche,
wobei das Überlagern der Bilddaten und der Textdaten während dem Betrieb des Bedienprogramms erfolgt.

11. Programmelement zum Erzeugen eines Bildes mit Text in einer ausgewählten Sprache zur Verwendung in einem mehrsprachigen Bedienprogramm für die Füllstandmessung oder Druckmessung, das, wenn es auf einem Prozessor ausgeführt wird, den Prozessor anleitet, die folgenden Schritte durchzuführen:
Bereitstellen von Bilddaten, die mit einem visualisierbaren Bild korrespondieren wobei die Bilddaten textfrei sind;
Bereitstellen von Steuerdaten zur Steuerung einer Überlagerung der Bilddaten mit Textdaten, die sich auf die Bilddaten beziehen und mit einem Text in der ausgewählten Sprache korrespondieren;
Erzeugen eines Bildes durch Überlagern der Bilddaten und der Textdaten unter Verwendung der Steuerdaten.

12. Computerlesbares Medium, auf dem ein Programmelement zum Erzeugen eines Bildes mit Text in einer ausgewählten Sprache zur Verwendung in einem mehrsprachigen Bedienprogramm für die Füllstandmessung oder Druckmessung, gespeichert ist, das, wenn es auf einem Prozessor ausgeführt wird, den Prozessor anleitet, die folgenden Schritte durchzuführen:
Bereitstellen von Bilddaten, die mit einem visualisierbaren Bild korrespondieren wobei die Bilddaten textfrei sind;
Bereitstellen von Steuerdaten zur Steuerung einer Überlagerung der Bilddaten mit Textdaten, die sich auf die Bilddaten beziehen und mit einem Text in der ausgewählten Sprache korrespondieren;
Erzeugen eines Bildes durch Überlagern der Bilddaten und der Textdaten unter Verwendung der Steuerdaten.

13. Steuergerät für ein Füllstandmessgerät oder für ein Druckmessgerät,
wobei das Steuergerät eine Recheneinheit zum Erzeugen eines Bildes mit Text in einer ausgewählten Sprache zur Verwendung in einem mehrsprachigen Bedienprogramm für das Füllstandmessgerät oder für das Druckmessgerät aufweist, wobei die Recheneinheit zur Durchführung der folgenden Schritte ausgeführt ist:
Bereitstellen von Bilddaten, die mit einem visualisierbaren Bild korrespondieren wobei die Bilddaten textfrei sind;
Bereitstellen von Steuerdaten zur Steuerung einer Überlagerung der Bilddaten mit Textdaten, die sich auf die Bilddaten beziehen und mit einem Text in der ausgewählten Sprache korrespondieren;
Erzeugen des Bildes durch Überlagern der Bilddaten und der Textdaten unter Verwendung der Steuerdaten.

14. Steuergerät nach Anspruch 13, wobei die Recheneinheit zur Durchführung des Verfahrens nach einem der Ansprüche 2 bis 11 ausgeführt ist.

## Claims

1. A method for generating an image with text in a selected language for use in a multilingual operating program for fill level measuring or pressure measuring, with the method comprising the steps of:
providing image data that corresponds to a visualisable image, wherein the image data is free of any text;
providing control data for controlling an overlay of the image data with text data that relates to the image data and that corresponds to a text in the selected language;
generating the image by overlaying the image data and the text data with the use of the control data.

2. The method according to claim 1,
wherein the image data is a visualisable image and the text data is a visualisable text.

3. The method according to any one of the preceding claims,
wherein the image data is not changed by the overlay.

4. The method according to any one of the preceding claims,
wherein the control data is provided as a control file.

5. The method according to any one of the preceding claims,
wherein the control data comprises information as to the location in the image at which a particular text module is to be overlaid with the image.

6. The method according to any one of the preceding claims,
wherein the control data comprises formatting information of the text.

7. The method according to any one of the preceding claims, further comprising the step of:
user-controlled selection of the language of the text to be overlaid.

8. The method according to any one of the preceding claims, further comprising the steps of:
storing the text data in a database;
referencing and identifying the text data by means of the control data.

9. The method according to any one of the preceding claims, further comprising the step of:
administering the text data by means of a database.

10. The method according to any one of the preceding claims,
wherein overlaying the image data and the text data takes place during operation of the operating program.

11. A program element for generating an image with text in a selected language for use in a multilingual operating program for fill level measuring or pressure measuring, which, when it is executed on a processor, instructs the processor to carry out the following steps:
providing image data that corresponds to a visualisable image, wherein the image data is free of any text;
providing control data for controlling an overlay of the image data with text data that relates to the image data and that corresponds to a text in the selected language;
generating the image by overlaying the image data and the text data with the use of the control data.

12. A computer-readable medium on which a program element for generating an image with text in a selected language for use in a multilingual operating program for fill level measuring or pressure measuring is stored which, when it is executed on a processor, instructs the processor to carry out the following steps:
providing image data that corresponds to a visualisable image, wherein the image data is free of any text;
providing control data for controlling an overlay of the image data with text data that relates to the image data and that corresponds to a text in the selected language;
generating the image by overlaying the image data and the text data with the use of the control data.

13. A control device for a fill-level measuring device or for a pressure measuring device,
wherein the control device comprises a processing unit for generating an image with text in a selected language for use in a multilingual operating program for the fill-level measuring device or for the pressure measuring device, wherein the processing unit is designed to carry out the following steps:
providing image data that corresponds to a visualisable image, wherein the image data is free of any text;
providing control data for controlling an overlay of the image data with text data that relates to the image data and that corresponds to a text in the selected language;
generating the image by overlaying the image data and the text data with the use of the control data.

14. A control device according to claim 13, wherein the arithmetic-logic unit is designed to carry out the method according to any one of claims 2 to 11.

## Revendications

1. Procédé de génération d'une image avec texte dans une langue sélectionnée pour l'application dans un programme d'exploitation multilingue destiné à la mesure de niveau ou à la mesure de pression, le procédé comprenant les étapes suivantes :
préparation de données d'image, qui correspondent à une image visualisable, les données d'image étant exemptes de texte ;
préparation de données de commande pour le contrôle d'une superposition des données d'image aux données de texte, qui se rapportent aux données d'image et correspondent à un texte dans la langue sélectionnée ;
génération de l'image par superposition des données d'image et des données de texte en utilisant les données de commande.

2. Procédé selon la revendication 1,
les données d'image étant une image visualisable et les données de texte étant un texte visualisable.

3. Procédé selon l'une des revendications précédentes,
les données d'image n'étant pas modifiées par la superposition.

4. Procédé selon l'une des revendications précédentes,
les données de commande étant préparées sous forme de fichier de commande.

5. Procédé selon l'une des revendications précédentes,
les données de commande renfermant des informations sur l'emplacement de l'image dans lequel doit être superposé à l'image un module de texte défini.

6. Procédé selon l'une des revendications précédentes,
les données de commande renfermant des informations de formatage du texte.

7. Procédé selon l'une des revendications précédentes, comprenant en outre l'étape suivante :
sélection, contrôlée par l'utilisateur, de la langue du texte à superposer.

8. Procédé selon l'une des revendications précédentes, comprenant en outre l'étape suivante :
mémorisation des données de texte dans une banque de données ;
référenciation et identification des données de texte à l'aide des données de commande.

9. Procédé selon l'une des revendications précédentes, comprenant en outre l'étape suivante :
gestion des données de texte par une banque de données.

10. Procédé selon l'une des revendications précédentes,
la superposition des données d'image et des données de texte s'effectuant pendant le fonctionnement du programme d'exploitation.

11. Elément de programme pour générer une image avec texte dans une langue sélectionnée pour l'application dans un programme d'exploitation multilingue destiné à la mesure de niveau ou à la mesure de pression, lequel élément qui, lorsqu'il est réalisé sur un processeur, donne à ce dernier l'instruction d'exécuter les étapes suivantes :
préparation de données d'image, qui correspondent à une image visualisable, les données d'image étant exemptes de texte ;
préparation de données de commande pour le contrôle d'une superposition des données d'image à des données de texte, qui se rapportent aux données d'image et correspondent à un texte dans la langue sélectionnée ;
génération d'une image par superposition des données d'image et des données de texte en utilisant les données de commande.

12. Support lisible sur ordinateur, sur lequel est mémorisé un élément de programme pour générer une image avec texte dans une langue sélectionnée en vue de l'application dans un programme d'exploitation multilingue destiné à la mesure de niveau ou à la mesure de pression, lequel élément qui, lorsqu'il est réalisé sur un processeur, donne à ce dernier l'instruction d'exécuter les étapes suivantes :
préparation de données d'image, qui correspondent à une image visualisable, les données d'image étant exemptes de texte ;
préparation de données de commande pour le contrôle d'une superposition des données d'image à des données de texte, qui se rapportent aux données d'image et correspondent à un texte dans la langue sélectionnée ;
génération d'une image par superposition des données d'image et des données de texte en utilisant les données de commande.

13. Appareil de commande pour un appareil de mesure de niveau ou pour un appareil de mesure de pression,
l'appareil de commande présentant une unité de calcul pour la génération d'une image avec texte dans une langue sélectionnée en vue de l'application dans un programme d'exploitation multilingue destiné à l'appareil de mesure de niveau ou à l'appareil de mesure de pression, l'unité de calcul étant réalisée pour la mise en oeuvre des étapes suivantes :
préparation de données d'image, qui correspondent à une image visualisable, les données d'image étant exemptes de texte,
préparation de données de commande pour le contrôle d'une superposition des données d'image à des données de texte, qui se rapportent aux données d'image et correspondent à un texte dans la langue sélectionnée ;
génération de l'image par superposition des données d'image et des données de texte en utilisant les données de commande.

14. Appareil de commande selon la revendication 13, l'unité de calcul étant réalisée pour la mise en oeuvre du procédé selon l'une des revendications 2 à 11.
